# EUROPÄISCHE PATENTSCHRIFT

(11) **EP 3 354 334 B1**
(45) Veröffentlichungstag und Bekanntmachung des Hinweises auf die Patenterteilung: **09.06.2021**
(21) Anmeldenummer: 18150945.6
(22) Anmeldetag: 10.01.2018
(51) Int. Cl.: B01F 13/08, B01F 7/00, B01F 7/16

(54) **RÜHRWERK FÜR EINEN RÜHRBEHÄLTER**
MIXER FOR A MIXING TANK
AGITATEUR POUR UNE CUVE MÉLANGEUSE

(30) Priorität: 25.01.2017 AT 500532017
(43) Veröffentlichungstag der Anmeldung: 01.08.2018
(73) Patentinhaber: Zeta Biopharma GmbH, 8501 Lieboch (AT)
(72) Erfinder: Münzer, Karl, 8580 Köflach (AT); Trummer, Erwin, 8083 St. Stefan im Rosental (AT); Zangl, Nicole, 8605 Kapfenberg (AT)
(74) Vertreter: Schwarz & Partner Patentanwälte OG

(56) Entgegenhaltungen:
- EP-A1- 2 286 907
- EP-A2- 1 748 201
- DE-B3-102015 000 704
- DE-U1- 20 306 404
- GB-A- 2 185 862
- GB-A- 2 196 800
- JP-A- S5 439 263
- US-A1- 2007 053 238

## Beschreibung

Die Erfindung betrifft ein Rührwerk für einen Rührbehälter, welches Rührwerk einen Rührkopf, eine Antriebseinheit, und eine Magnetkupplung umfasst, wobei die Magnetkupplung mit der Antriebseinheit verbundene Antriebsmagnete und mit dem Rührkopf verbundene Rührkopfmagnete aufweist, wobei der Rührkopf Rührflügel, und eine Lageranordnung aufweist, und die Rührflügel mit den Rührkopfmagneten und der Lageranordnung verbunden sind, wobei die Lageranordnung den Rührkopf drehbar lagert, und die Lageranordnung ein erstes Rotationslager umfasst.

Rührwerke für Rührbehälter werden beispielsweise in der biopharmazeutischen Industrie, der Lebensmittelindustrie, und insbesondere auf dem Gebiet der aseptischen flüssigen Produktionsprozesse eingesetzt. Typische Bauarten solcher Rührbehälter sind gasdichte und verschließbare, kesselförmige Behälter aus Metall oder Glas, die eine einfache Reinigung und Sterilisation und somit eine mehrfache Verwendung gewährleisten. Die Durchmischung eines im Rührbehälter aufgenommenen Rührmediums erfolgt innerhalb des Rührbehälters mittels eines Rührkopfes, welcher Rührflügel aufweist und welcher, je nach Anwendungsfall und Bauform des Rührbehälters, mit einer Rührwelle mit an dieser angeordneten Rührwellenflügeln verbunden ist. In herkömmlichen Rührwerken erfolgt die Verbindung der Antriebseinheit mit dem Rührkopf durch eine Gleitringdichtung. Mittels einer Gleitringdichtung gedichtete Rührwerke weisen allerdings den Nachteil auf, dass Leckagen an der Dichtung auftreten können. Des Weiteren ist die Wartung dieses Dichtungstyps arbeits- und kostenintensiv, wobei die Leckage bei sachgemäßer Wartung im minimalen Bereich liegt. Im pharmazeutischen Bereich und der Lebensmittelindustrie stellt diese Leckage und die damit verbundene Kontamination des Rührmediums jedoch ein hohes Risiko dar. Daher wird in diesen Industrien vermehrt von Gleitring gedichteten Rührwerken auf Rührwerke mit Magnetkupplung gesetzt, die auch als Magnetrührwerke bezeichnet werden. Die Lagerung des Rührkopfes derartiger Rührwerke erfolgt über ein Rotationslager, wie beispielsweise ein Gleitlager.

EP 1 748 201 B1 offenbart ein Rührwerk, welches eine Magnetkupplung zwischen Antriebseinheit und Rührwerk aufweist. Dieses umfasst des Weiteren ein Rotationslager in Form eines Gleitlagers, welches durch das Rührmedium innerhalb des Behälters geschmiert wird.

Als nachteilig hat sich in derartigen Konstruktionen erwiesen, dass das Rotationslager das aufgebrachte Drehmoment der Antriebseinheit, die Maximaldrehzahl, die Größe der Rührflügel, sowie die Länge der Rührwelle begrenzt. Eine Steigerung dieser Eigenschaften führt zu verstärkten Vibrationen am Rührkopf, und in weiterer Folge mechanischen Beschädigungen.

EP 2 286 907 A1 offenbart ein Rührwerk entsprechend dem Oberbegriff des Anspruchs 1, mit einer geteilten Lageranordnung.

JP S54 39263 A offenbart ebenfalls ein Rührwerk mit einer geteilten Lageranordnung.

Es ist die Aufgabe der vorliegenden Erfindung ein Rührwerk zu bilden, das die Nachteile der oben angeführten Konstruktionen vermeidet.

Erfindungsgemäß wird die vorliegende Aufgabe durch ein Rührwerk entsprechend Anspruch 1 gelöst.

Die erfindungsgemäße Ausführung des Rührwerks sieht eine geteilte Lagerung des Rührkopfs vor, wodurch die Vorteile einer höheren Stabilität, Belastbarkeit und Lebensdauer des Rührkopfes gegenüber dem Stand der Technik erreicht werden. Dies erlaubt insbesondere weitere Modifikationen an den restlichen Komponenten des Rührwerks, wie eine erhöhte Leistung der Antriebseinheit.

Des Weiteren bietet die erfindungsgemäße Ausführung des Rührwerks den Vorteil, dass durch die erhöhte Belastbarkeit der Lageranordnung die Wahrscheinlichkeit von Lagerbrüchen reduziert wird. Diese haben in der Regel aufwändige Wartungs- und Reparaturarbeiten, sowie damit verbundene Stillstandzeiten zur Folge. Zusätzlich können Lagerbrüche zu einer Kontamination des Rührmediums führen, wodurch das Rührmedium nicht weiter verarbeitbar ist, und entsorgt werden muss. Die erhöhte Belastbarkeit der Lageranordnung bietet insbesondere den Vorteil, dass längere Rührwellen verwendet werden können, welche zu verstärkten Schwingungen der Rührwelle, und somit einer stärkeren Belastung der Lageranordnung des Rührkopfes führen. Dies führt dazu, dass das erfindungsgemäße Rührwerk, im Vergleich zu Rührwerken des Standes der Technik, in größeren Rührbehältern verwendet werden kann. Des Weiteren können hierdurch Rührmedien bearbeitet werden, welche im Vergleich zum Stand der Technik eine stärkere Inhomogenität aufweisen.

Besonders vorteilhaft ist, dass durch die zur Verfügung stehende höhere Antriebsleistung gesteigerte Rotationsgeschwindigkeiten des Rührkopfes erreicht werden können, wodurch eine stärkere Durchmischung des Rührmediums sichergestellt wird. Des Weiteren können größere Rührflügel, sowie größere Rührwellenflügel zur Anwendung kommen. Dies erlaubt ebenfalls Rührbehälter mit größerem Volumen zu verwenden, oder Rührmedien mit höherer Viskosität oder stärkerer Inhomogenität zu verarbeiten.

Vorteilhafte Ausgestaltungen des erfindungsgemäßen Rührwerks sowie alternativer Ausführungsvarianten werden in weiterer Folge anhand der Figuren näher erläutert.
Figur 1 zeigt einen Schnitt durch einen Rührkopf eines erfindungsgemäßen Rührwerks in Frontalansicht mit einer geschlossenen Magnetkupplung.
Figur 2 zeigt einen Schnitt durch den Rührkopf von Figur 1 im demontierten Zustand in Frontalansicht.
Figur 3 zeigt einen Schnitt durch einen Rührbehälter mit einem erfindungsgemäßen Rührwerk in Frontalansicht.

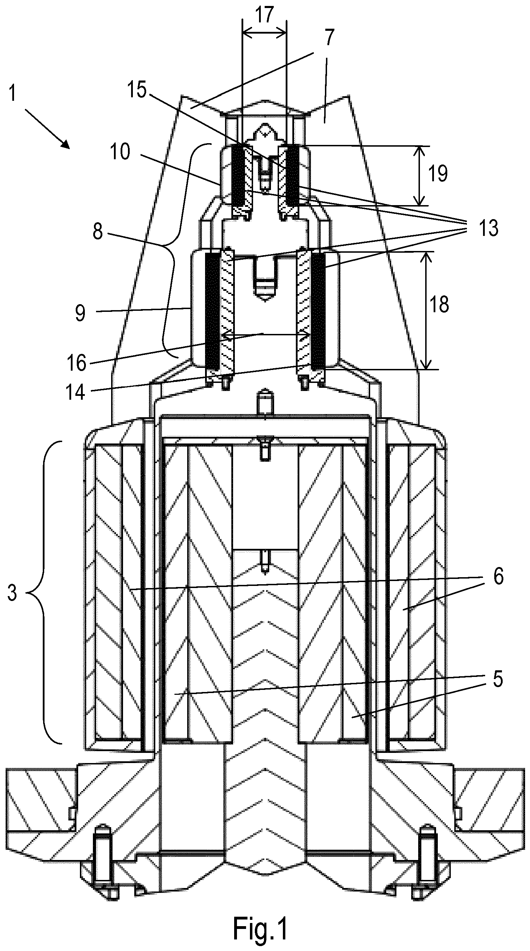

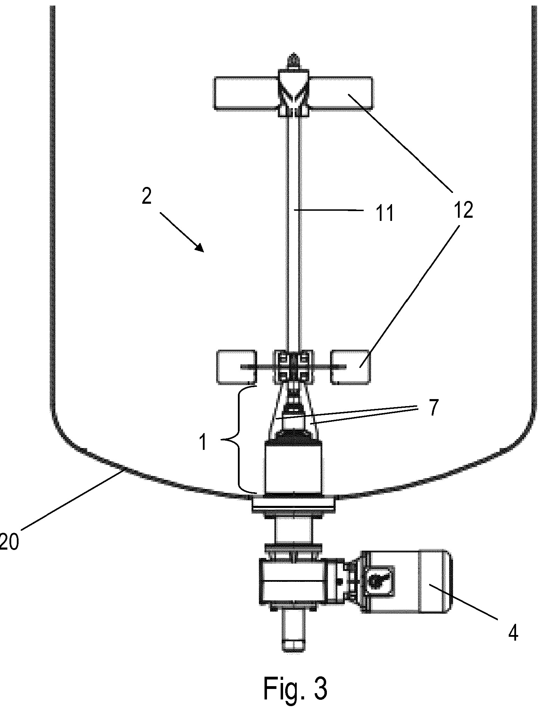

Figur 1 zeigt eine bevorzugte Ausführungsvariante eines Rührkopfes 1 eines erfindungsgemäßen Rührwerks 2, welches in Figur 3 vollständig dargestellt ist, mit einer geschlossenen Magnetkupplung 3. Das Rührwerk 2 umfasst den Rührkopf 1, eine Antriebseinheit 4, welche in Figur 3 dargestellt ist, sowie die Magnetkupplung 3. Die Magnetkupplung 3 beinhaltet Antriebsmagnete 5 und Rührkopfmagnete 6, wobei die Rührkopfmagnete 6 mit dem Rührkopf 1 starr verbunden sind. Die Antriebsmagnete 5 sind ihrerseits mit der Antriebseinheit 4 verbunden. Im Betrieb versetzt die Antriebseinheit 4 die Antriebsmagnete 5, welche mit den Rührkopfmagneten 6 magnetisch gekoppelt sind, in Rotation. Hierdurch wird eine Rotationsbewegung der Antriebsmagnete 5 auf die Rührkopfmagnete 6 übertragen, und der Rührkopf 1 in Rotation versetzt, um ein Rührmedium zu durchmischen.

Des Weiteren umfasst der Rührkopf 1 Rührflügel 7, sowie eine Lageranordnung 8. Die Lageranordnung 8 ist aus einem ersten Rotationslager 9 und einem zweiten Rotationslager 10 aufgebaut, welche beabstandet voneinander im Rührkopf 1 angeordnet sind. Die Rührflügel 7 stellen eine starre Verbindung der Rührkopfmagnete 6 mit dem ersten Rotationslager 9 und dem zweiten Rotationslager 10 her. Der geteilte Aufbau der Lageranordnung 8 mittels des ersten Rotationslagers 9 und des zweiten Rotationslagers 10 bietet den Vorteil, dass Belastungen, welche durch die Lageranordnung 8 aufgenommen werden, aufgeteilt werden. Dies bietet den Vorteil, dass hierdurch eine höhere Stabilität, Belastbarkeit und Lebensdauer der Lageranordnung 8 gegenüber dem Stand der Technik erreicht wird. In der in Figur 1 dargestellten, bevorzugten Ausführungsvariante befindet sich das erste Rotationslager 9 näher an der Magnetkupplung 3 als das zweite Rotationslager 10.

Der Rührkopf 1 ermöglicht zusätzlich die Aufnahme einer in Figur 3 dargestellten Rührwelle 11 mit an dieser angeordneten Rührwellenflügeln 12 an dem der Magnetkupplung 3 gegenüberliegenden Ende des Rührkopfes 1.

Das erste Rotationslager 9 und das zweite Rotationslager 10 sind in der bevorzugten Ausführungsvariante als Gleitlager mit Gleitflächen 13 ausgeführt. Das erste Rotationslager 9 und das zweite Rotationslager 10 werden hierbei durch das Rührmedium geschmiert, welches durch das Rührwerk 2 durchmischt wird. Diese Ausführung bietet den Vorteil eines besonders einfachen und widerstandfähigen Aufbaus des Rührkopfes 1, mit einer geringen Anzahl an bewegten Teilen. Des Weiteren erleichtert dieser Aufbau eine Demontage des Rührkopfes 1 vom Rührwerk 2. Besonders bevorzugt ist die Ausführung der Gleitflächen 13 aus keramischen Werkstoffen, metallischen Werkstoffen, oder Polymerverbindungen wie etwa PEEK, beziehungsweise aus beliebigen Kombinationen dieser Werkstoffe. Die Gleitflächen 13 können zusätzlich eine Beschichtung, wie beispielsweise eine Diamantbeschichtung aufweisen. Dies bietet den Vorteil eines besonders geringen Verschleißes. In alternativen Ausführungsvarianten sind andere Formen der Rotationslager 9 und 10, wie beispielsweise Kugellager oder Walzenlager, einsetzbar. Weitere Formen der Rotationslager 9 und 10 ergeben sich für den Fachmann aus diesem beispielhaften Verweis.

Zwischen den Gleitflächen 13 des ersten Rotationslagers 9 befindet sich ein erster Lagerspalt 14, und zwischen den Gleitflächen 13 des zweiten Rotationslagers 10 befindet sich ein zweiter Lagerspalt 15. Diese Lagerspalte 14 und 15 besitzen aufgrund des Aufbaus von Rotationslagern einen kreisförmigen Querschnitt, welcher einen ersten Lagerspaltdurchmesser 16 für das erste Rotationslager 9 und einen zweiten Lagerspaltdurchmesser 17 für das zweite Rotationslager 10 aufweist.

Des Weiteren besitzt das erste Rotationslager 9 eine erste Breite 18, und das zweite Rotationslager 10 eine zweite Breite 19, welche die Abmessungen der Rotationslager 9 und 10 normal auf die Lagerspaltdurchmesser 16 und 17 darstellen.

In der in Figur 1 dargestellten, bevorzugten Ausführungsvariante des Rührkopfes 1 unterscheidet sich der erste Lagerspaltdurchmesser 16 vom zweiten Lagerspaltdurchmesser 17, sowie die erste Breite 18 von der zweiten Breite 19. Hierdurch ergibt sich der Vorteil, dass am Rührkopf 1 auftretende Schwingungen durch das zweite Rotationslager 10 aufgenommen werden, und nur gedämpft über die Rührkopfflügel 7 an das erste Rotationslager 9 abgegeben werden. Zusätzlich ergibt sich eine Lastenverteilung innerhalb der Lagerandordnung 8, welche unerwünschtes Pendeln des Rührkopfes 1 unterdrückt.

Insbesondere sind in der in Figur 1 dargestellten, bevorzugten Ausführungsvariante die erste Breite 18 und der erste Lagerspaltdurchmesser 16 größer als die zweite Breite 19 und der zweite Lagerspaltdurchmesser 17. Hierdurch wird gewährleistet, dass bei einer Belastung der Lageranordnung 8 die Wahrscheinlichkeit eines Lagerbruchs des zweiten Rotationslagers 10 höher ist, als die Wahrscheinlichkeit eines Lagerbruchs des ersten Rotationslagers 9. Dies ist vorteilhaft, da das zweite Rotationslager 10 geringere Abmessungen als das erste Rotationslager 9 aufweist, und somit kostengünstiger zu ersetzen ist.

Der in Figur 1 dargestellte Rührkopf 1 ermöglicht, wie bereits erwähnt, die Aufnahme der in Figur 3 dargestellten Rührwelle 11 mit den, an dieser angeordneten Rührwellenflügeln 12 an dem der Magnetkupplung 3 gegenüberliegenden Ende des Rührkopfes 1. Die zuvor angeführten Verhältnisse der ersten Breite 18 und der zweiten Breite 19, sowie des ersten Lagerspaltdurchmessers 16 und des zweiten Lagerspaltdurchmessers 17 sind insbesondere bei der Verwendung langer Rührwellen 11 von Vorteil, an welchen stärkere Schwingungen auftreten können, um ein unerwünschtes Pendeln des Rührkopfes 1 zu unterdrücken.

Erfindungsgemäss ist das erste Rotationslager 9 ausschließlich über die Rührflügel 7 mit dem zweiten Rotationslager 10 verbunden. Dies bietet den Vorteil einer besonders stabilen Verbindung, bei gleichzeitig geringem Materialeinsatz und einer gedämpften Schwingungsübertragung zwischen den Rotationslagern 9 und 10.

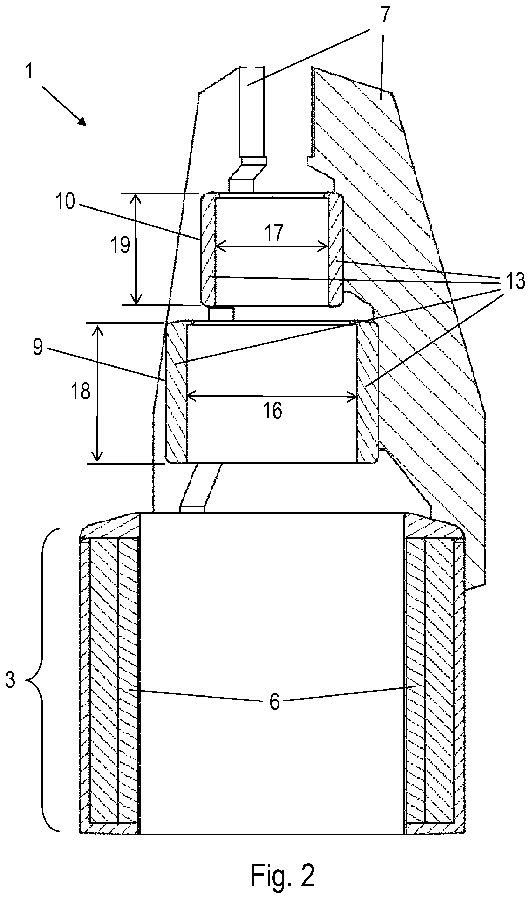

Figur 2 zeigt den Rührkopf 1 gemäß Figur 1, in einem vom Rührwerk 2 demontierten Zustand. Hierzu wurde die Magnetkupplung 3 geöffnet, wobei die Antriebsmagnete 5 von den Rührkopfmagneten 6 getrennt wurden. Des Weiteren wurden die Gleitflächen 13 des ersten Rotationslagers 9 und des zweiten Rotationslagers 10 getrennt.

Figur 3 zeigt das erfindungsgemäße Rührwerk 2, installiert in einem Rührbehälter 20. In der dargestellten, bevorzugten Ausführungsvariante des Rührbehälters 20 ist das Rührwerk 2 an einem Behälterboden des Rührbehälters 20 installiert. In einer alternativen Ausführungsvariante ist das Rührwerk 2 an einem Behälterdeckel des Rührbehälters 20, welcher Behälterdeckel auch abnehmbar gestaltet sein kann, installiert. Die Antriebseinheit 4 befindet sich außerhalb des Rührbehälters 20. Der Rührbehälter 20 kann mit dem Rührmedium befüllt werden, welches dann durch die Rotationsbewegung des Rührkopfes 1 durchmischt werden kann. Das Rührwerk 2 in Figur 3 umfasst des Weiteren die Rührwelle 11, an welcher die Rührwellenflügel 12 angeordnet sind. Die Rührwelle 11 ist mit dem Rührkopf 1 starr verbunden und bietet den Vorteil, dass mittels der Rührwellenflügel 12 eine homogene Durchmischung des Rührmediums im gesamten Rührbehälter 20 gewährleistet ist. Die erfindungsgemäße Ausgestaltung des Rührwerks 2 bietet den Vorteil verschieden gestaltete Rührflügel 7, sowie Rührwellen 11 mit unterschiedlichen Längen und Rührwellenflügeln 12 anzuwenden. Hierdurch wird ermöglicht das erfindungsgemäße Rührwerk 2 in einer Vielzahl unterschiedlicher Formen von Rührbehältern 20 und, wie in Figur 3 dargestellt, am Behälterboden des Rührbehälters 20 als auch an dessen Behälterdeckel, in Figur 3 nicht dargestellt zu installieren. Dies bietet den Vorteil, dass das erfindungsgemäße Rührwerk 2 in einer Vielzahl unterschiedlicher Rührbehälter 20 verwendbar ist.

## Patentansprüche

1. Rührwerk (2) für einen Rührbehälter (20), welches Rührwerk (2) einen Rührkopf (1), eine Antriebseinheit (4), und eine Magnetkupplung (3) umfasst,
wobei die Magnetkupplung (3) mit der Antriebseinheit (4) verbundene Antriebsmagnete (5) und mit dem Rührkopf (1) verbundene Rührkopfmagnete (6) aufweist,
wobei der Rührkopf (1) Rührflügel (7), und eine Lageranordnung (8) aufweist,
und die Rührflügel (7) mit den Rührkopfmagneten (6) und der Lageranordnung (8) verbunden sind,
wobei die Lageranordnung (8) den Rührkopf (1) drehbar lagert,
und die Lageranordnung (8) ein erstes Rotationslager (9) umfasst,
wobei die Lageranordnung (8) ein zweites Rotationslager (10) umfasst, welches beabstandet vom ersten Rotationslager (9) im Rührkopf (1) angeordnet ist, **dadurch gekennzeichnet, dass** das erste Rotationslager (9) ausschließlich über die Rührflügel (7) mit dem zweiten Rotationslager (10) verbunden ist.

2. Rührwerk (2) gemäß Anspruch 1, **dadurch gekennzeichnet, dass**
das erste Rotationslager (9) einen ersten Lagerspaltdurchmesser (16),
und das zweite Rotationslager (10) einen zweiten Lagerspaltdurchmesser (17) aufweist, welcher sich vom ersten Lagerspaltdurchmesser (16) unterscheidet.

3. Rührwerk (2) gemäß einem der vorhergehenden Ansprüche, **dadurch gekennzeichnet, dass** das erste Rotationslager (9) eine erste Breite (18) und das zweite Rotationslager (10) eine zweite Breite (19) aufweist, welche sich von der ersten Breite (18) unterscheidet.

4. Rührwerk (2) gemäß den Ansprüchen 2 und 3, **dadurch gekennzeichnet, dass** der erste Lagerspaltdurchmesser (16) größer als der zweite Lagerspaltdurchmesser (17) und, dass die erste Breite (18) größer als die zweite Breite (19) ist.

5. Rührwerk (2) gemäß einem der vorhergehenden Ansprüche, **dadurch gekennzeichnet, dass** das Rührwerk (2) eine Rührwelle (11) mit Rührwellenflügeln (12) umfasst, welche mit dem Rührkopf (1) verbunden ist.

6. Rührwerk (2) gemäß einem der vorhergehenden Ansprüche, **dadurch gekennzeichnet, dass** das erste Rotationslager (9) und das zweite Rotationslager (10) als Gleitlager ausgeführt sind.

7. Rührwerk (2) gemäß Anspruch 6, **dadurch gekennzeichnet, dass** das erste Rotationslager (9) und das zweite Rotationslager (10) Gleitflächen (13) aus zumindest einem Werkstoff aus der Gruppe aus keramischen Werkstoffen, metallischen Werkstoffen, und Polymerverbindungen enthalten, wobei die Gleitflächen (13) eine Beschichtung aufweisen können.

8. Rührbehälter (20) zum Rühren eines Rührmediums, umfassend ein Rührwerk (2) gemäß einem der Ansprüche 1 bis 7, welches in einem Behälterboden oder in einem abnehmbaren Behälterdeckel des Rührbehälters (20) angeordnet ist.

## Claims

1. A stirrer (2) for a stirrer vessel (20), which stirrer (2) comprises a stirrer head (1), a drive unit (4) and a magnetic coupling (3), wherein the magnetic coupling (3) has drive magnets (5) connected to the drive unit (4) and stirrer head magnets (6) connected to the stirrer head (1), wherein the stirrer head (1) has stirrer blades (7) and a bearing assembly (8), and wherein the stirrer blades (7) are connected to the stirrer head magnets (6) and the bearing assembly (8), wherein the bearing assembly (8) rotatably supports the stirrer head (1) and the bearing assembly (8) comprises a first rotational bearing (9), wherein the bearing assembly (8) comprises a second rotational bearing (10), which is arranged spaced apart from the first rotational bearing (9) in the stirrer head (1), **characterized in that** the first rotational bearing (9) is connected to the second rotational bearing (10) exclusively via the stirrer blades (7).

2. A stirrer (2) according to claim 1, **characterized in that** the first rotational bearing (9) has a first bearing gap diameter (16) and the second rotational bearing (10) has a second bearing gap diameter (17), which is different from the first bearing gap diameter (16).

3. A stirrer (2) according to any of the preceding claims, **characterized in that** the first rotational bearing (9) has a first width (18) and the second rotational bearing (10) has a second width (19), which is different from the first width (18).

4. A stirrer (2) according to claims 2 and 3, **characterized in that** the first bearing gap diameter (16) is larger than the second bearing gap diameter (17) and that the first width (18) is larger than the second width (19).

5. A stirrer (2) according to any of the preceding claims, **characterized in that** the stirrer (2) comprises a stirrer shaft (11) having stirrer shaft blades (12), which are connected to the stirrer head (1).

6. A stirrer (2) according to any of the preceding claims, **characterized in that** the first rotational bearing (9) and the second rotational bearing (10) are configured as sliding bearings.

7. A stirrer (2) according to claim 6, **characterized in that** the first rotational bearing (9) and the second rotational bearing (10) contain sliding surfaces (13) made from at least one material of the group consisting of ceramic materials, metallic materials and polymer compounds, wherein the sliding surfaces (13) may have a coating.

8. A stirrer vessel (20) for stirring a stirring medium, comprising a stirrer (2) according to any of the claims 1 to 8, which is arranged in a vessel bottom or in a detachable vessel cover of the stirrer vessel (20).

## Revendications

1. Agitateur (2) pour un récipient agitateur (20), ledit agitateur (2) comprenant une tête d'agitation (1), une unité d'entraînement (4) et un couplage magnétique (3),
dans lequel le couplage magnétique (3) comprend des aimants d'entraînement (5) qui sont reliés à l'unité d'entraînement (4) ainsi que des aimants de tête d'agitation (6) qui sont reliés à la tête d'agitation (1),
dans lequel la tête d'agitation (1) comprend des pales agitatrices (7) et un ensemble de paliers (8), les pales agitatrices (7) étant reliées aux aimants de tête d'agitation (6) ainsi qu'à l'ensemble de paliers (8),
dans lequel l'ensemble de paliers (8) supporte la tête d'agitation (1) en rotation, et l'ensemble de paliers (8) comprend un premier palier de rotation (9), et
dans lequel l'ensemble de paliers (8) comprend un second palier de rotation (10) qui est disposé à distance du premier palier de rotation (9) dans la tête d'agitation (1), **caractérisé en ce que** le premier palier de rotation (9) est relié au second palier de rotation (10) exclusivement par l'intermédiaire des pales agitatrices (7).

2. Agitateur (2) selon la revendication 1, **caractérisé en ce que** le premier palier de rotation (9) présente un premier diamètre d'interstice de palier (16) et le second palier de rotation (10) présente un second diamètre d'interstice de palier (17) qui est différent du premier diamètre d'interstice de palier (16).

3. Agitateur (2) selon l'une quelconque des revendications précédentes, **caractérisé en ce que** le premier palier de rotation (9) présente une première largeur (18) et le second palier de rotation (10) présente une seconde largeur (19) qui est différente de la première largeur (18).

4. Agitateur (2) selon les revendications 2 et 3, **caractérisé en ce que** le premier diamètre d'interstice de palier (16) est plus grand que le second diamètre d'interstice de palier (17), et **en ce que** la première largeur (18) est plus grande que la seconde largeur (19).

5. Agitateur (2) selon l'une quelconque des revendications précédentes, **caractérisé en ce que** l'agitateur (2) comprend un arbre d'agitation (11) qui comporte des pales d'arbre d'agitation (12) et qui est relié à la tête d'agitation (1).

6. Agitateur (2) selon l'une quelconque des revendications précédentes, **caractérisé en ce que** le premier palier de rotation (9) et le second palier de rotation (10) sont réalisés sous la forme de paliers lisses.

7. Agitateur (2) selon la revendication 6, **caractérisé en ce que** le premier palier de rotation (9) et le second palier de rotation (10) comportent des surfaces de glissement (13) qui sont composées d'au moins un matériau qui appartient au groupe des matériaux céramiques, des matériaux métalliques et des composés polymères, dans lequel les surfaces de glissement (13) peuvent présenter un revêtement.

8. Récipient agitateur (20) pour agiter un milieu à agiter, comprenant un agitateur (2) selon l'une quelconque des revendications 1 à 7, ledit agitateur étant disposé dans un fond de récipient ou dans un couvercle de récipient amovible du récipient agitateur (20).
